# EUROPEAN PATENT APPLICATION

(11) **EP 4 556 281 A1**
(43) Date of publication of application: **21.05.2025**
(21) Application number: 24212930.2
(22) Date of filing: 14.11.2024
(51) Int. Cl.: B60K 17/344, F16H 57/03

(54) **TRANSFER CASE**

(30) Priority: 17.11.2023 AU 2023903708; 09.08.2024 AU 2024902479
(71) Applicant: Titan Design & Engineering Pty Ltd, Jerrabomberra, New South Wales 2619 (AU)
(72) Inventor: NASH, Benjamin Gerard, Jerrabomberra, 2619 (AU)
(74) Representative: V.O.

(57) **Abstract**

An adaptor transfer case configured for use in a vehicle having a powertrain and a primary transfer case, where the adaptor transfer case comprises: an input shaft configured to be driven by the powertrain; and an output shaft configured for coupling to the primary input shaft of the primary transfer case; wherein the input shaft is configured to be coupled to the powertrain at a first side of the adaptor transfer case, and the output shaft is configured to be coupled to the primary input shaft of the primary transfer case at the first side of the adaptor transfer case. Also provided is a method of converting or reconfiguring the powertrain of a vehicle using the adaptor transfer case.

## Description

### Cross-reference to Related Applications

This application claims priority from Australian Provisional Patent Application No. 2023903708 filed on 17 November 2023 and Australian Provisional Patent Application No. 2024902479 filed on 9 August 2024, the entire contents of each of which are incorporated herein by reference.

### Technical Field

The present invention relates to a transfer case for a vehicle that can be retrofit to a vehicle to augment an existing transfer case. The invention also relates to a method of converting or reconfiguring the powertrain of a vehicle.

### Background

The Universal-Motor-Gerät, more commonly known by its German acronym "Unimog", was originally conceived as an agricultural vehicle. Unimogs are characterised by coil sprung beam portal axles, which enable the wheel centres' to be below the axle centre. This affords Unimogs a high ground clearance without big tyres. Due to their off-road capabilities, Unimogs have been used in a variety of defence and civilian applications.

In many all-wheel drive vehicles, the gearbox and transfer case are located near the front of the vehicle. However, in a Unimog, the gearbox and transfer case are located in the centre of the chassis, between the front and rear axles. Indeed, in a Unimog, the gearbox may be located closer to the rear of the vehicle than the transfer case. There is a driveshaft connecting the centrally located gearbox to the engine located near the front of the vehicle.

This central location of the gearbox and transfer case can be advantageous as it helps to distribute the weight of the engine and transmission, improving the vehicle's handling and stability. In addition, the central location of the gearbox and transfer case allows for a shorter and more direct driveshaft to the rear axle. This may reduce power loss and improves driveline efficiency.

Typically, Unimogs have an eight-speed manual gearbox. In some cases, the gearbox is a manual transmission with eight forward gears and two reverse gears or six reverse gears. The original eight-speed manual gearbox of a Unimog, particularly the original gearbox of older Unimog models such as the UG3/40 and UG3/65 gearboxes, can be problematic and difficult to repair. In addition, the costs associated with repair may be high. For example, gearbox challenges have been observed in Unimog Models: U1000, U1200, U1250, U1300, U1400, U1450, U1500, U1550, U1600, U1700, U1750, U2150, and U2450.

It can be desirable to replace the gearbox in Unimogs with a more modern gearbox. In some cases, it can be desirable to use a more modern gearbox and engine in the vehicle. However, this can involve replacing not only the gearbox and engine, but also the transfer case, of the vehicle. Transfer cases are commonly used in four-wheel drive or all-wheel drive systems to distribute power between the front and rear axles.

These transfer cases are typically integrated with the vehicle's transmission system and are designed to provide different gear ratios for various driving conditions. Transfer cases are usually built as part of the vehicle's drivetrain and cannot be easily removed and replaced. Replacing the entire transmission system can be costly and time-consuming. This is particularly the case for Unimog transfer cases.

The driveshafts connect, from the transfer case, to the differentials of the front and rear axles are enclosed within a thrust tube. The thrust tubes provide a protective enclosure for the driveshafts, shielding them from debris, rocks, and other hazards encountered during off-road driving. The thrust tubes also provide structural support to the driveshafts and aid in maintaining proper alignment of them.

The thrust tubes transfer loads to the housing of transfer case. Accordingly, the housing will be configured to withstand the loads encountered during use. The housing may have fore- and aft-plates that extend between the chassis rails and are robustly configured to withstand the loads received during use. This robust construction of the transfer case can add to the cost and complexity of replacing this transfer case in order to reconfigure the transmission of a Unimog.

Furthermore, the location of the transfer case affects the geometry of the driveshafts to the front and rear axles. The location of the transfer case will affect the length and angle of the drive shafts. As noted above, optimising the length of the driveshafts to the front and rear axles may reduce power loss and improves driveline efficiency. Accordingly, it can be advantageous to retain the original transfer case so as to maintain the desirable angle and configuration of the driveshafts to the front and rear axles. This may avoid compromising the driveshaft geometry.

It may be desirable to reconfigure transmissions without replacing the original transfer case, or by at least maintaining a transfer case in the original position. Accordingly, it is desirable to address or ameliorate one or more disadvantages or shortcomings associated with existing methods of reconfiguring the powerline of Unimogs (or similar vehicles) or at least to provide a useful alternative thereto.

### Summary of the Invention

The present invention provides an adaptor transfer case configured for use in a vehicle having a powertrain and a primary transfer case; said primary transfer case comprising: a primary input shaft configured to be driven by the powertrain; a first output shaft adapted to drive a first driveline; and a second output shaft adapted to drive a second driveline; wherein said adaptor transfer case comprises: an input shaft configured to be driven by the powertrain; and an output shaft configured for coupling to the primary input shaft of the primary transfer case, wherein the input shaft is configured to be coupled to the powertrain at a first side of the adaptor transfer case, and the output shaft is configured to be coupled to the primary input shaft of the primary transfer case at the first side of the adaptor transfer case. For example, the adaptor transfer case may be disposed along the drivetrain intermediate the gearbox and the primary transfer case. The adaptor transfer case of the present invention may be a transfer case adaptor or modifier, as it augments or is auxiliary to the primary transfer case of the vehicle. The input shaft of the adaptor transfer case is configured to be driven by the powertrain, with the mechanism of the transfer case configured so that the input shaft drives the output shaft. That is, the adaptor transfer case is configured to receive power from the powertrain via the input shaft and output power via the output shaft configured for coupling to the primary input shaft of the primary transfer case.

The adaptor transfer case may be configured for use with a Unimog. The adaptor transfer case may be particularly advantageous when utilised to reconfigure transmissions without replacing the original, centrally-located transfer case of a Unimog. As used herein, the term "Unimog" may refer to Universal-Motor-Gerät vehicles including trucks as well as derivatives of these trucks, such as tractors and military vehicles (armoured vehicles e.g the ATF Dingo). In some of the embodiments in which the present invention is configured for use with a Unimog, the Unimog may be one or more selected from the group consisting of: Model Series 424; Model Series 425; Model Series 426; Model Series 427; Model Series 435; Model Series 436; and Model Series 437. The Unimog may be one or more selected from the group consisting of Unimog Models: U1000, U1200, U1250, U1300, U1400, U1450, U1500, U1550, U1600, U1700, U1750, U2150, and U2450. However, the present invention may be used with other vehicles having centrally placed transfer cases e.g. transfer cases located between the vehicle axles.

Configuring the adaptor transfer case such that the input shaft and the output shaft are each adapted to be coupled to their respective vehicle components on the same side of the adaptor transfer case may facilitate the positioning of the adaptor transfer case so that it can be coupled to a centrally-located primary transfer case and upstream powertrain components. In some cases, it will be advantageous to position the adaptor transfer case behind the primary transfer case (relative to the normal direction of travel of the vehicle). In some embodiments, it will be advantageous to position the adaptor transfer case closer to the rear of the vehicle than the primary transfer case, with the gearbox being located closer to the front of the vehicle than the adaptor transfer case (and optionally the primary transfer case). Accordingly, in some embodiments, the input shaft is configured to be coupled to the powertrain at a first side of the adaptor transfer case, and the output shaft is configured to be coupled to the primary input shaft of the primary transfer case at the first side of the adaptor transfer case, wherein the first side of the adaptor transfer case is configured to be located closer to the front of the vehicle than an opposite second side of the adaptor transfer case.

In some embodiments, the adaptor transfer case is configured for mounting at least partially within a spatial envelope immediately adjacent the primary transfer case. In some cases, the adaptor transfer case may be directly mounted to the primary transfer case, such as by being mounted to the housing of the primary transfer case. In some other embodiments, the adaptor transfer case may be mounted via a coupling so that the adaptor transfer case is positioned in close proximity to the primary transfer case.

The spatial envelope may be an original gearbox spatial envelope. That is, the spatial envelope may be the region previously occupied by the gearbox, prior to its removal as part of reconfiguring the transmission. Thus, the adaptor transfer case may enable the original (potentially problematic) gearbox of a Unimog to be replaced and take advantage of the space previously occupied by the original gearbox to ensure the efficient packaging of components as part of the reconfiguration of the powertrain. For example, the adaptor transfer case of the present invention may be mounted to the primary transfer case using the mounting previous used for the original gearbox. This may simplify the reconfiguration process as it can avoid making modifications to the primary transfer case.

In some embodiments, the adaptor transfer case further comprises a housing configured to support the input shaft and the output shaft, wherein the housing comprises: a first side configured to interface with the vehicle powertrain and the primary transfer case, such that the vehicle powertrain is couplable to the input shaft at the first side, and the primary input shaft of the primary transfer case is couplable to the output shaft at the first side. The input shaft may be coupled to a gearbox or an intermediate driveshaft of the vehicle powertrain. This may facilitate positioning the adaptor transfer case to the rear of the primary transfer case, such as in a position vacated by the removal of an original gearbox.

The adaptor transfer case has an output shaft configured for coupling to the primary input shaft of the primary transfer case. In some embodiments, the adaptor transfer case is adapted to couple to the primary transfer case without modifications to the primary transfer case. For example, the coupling between the adaptor transfer case output shaft and the primary input shaft of the primary transfer case may use the same bolt pattern as the original connection of the primary input shaft to the upstream powertrain components.

In some embodiments, the adaptor transfer case is gear-driven. The adaptor transfer case may comprise a gear assembly comprising three or more gears including a first gear and a second gear, wherein: the input shaft includes the first gear; and the output shaft includes the second gear. In some of these embodiments, the gear assembly is configured so that the ratio of the first gear and second gear is from about 0.5:1 to about 5:1, such as from about 0.83: 1 to about 2:1. The gear assembly may be configured so that the ratio of the first gear and second gear is about 1:1.

Alternatively, the adaptor transfer case may be chain-driven. In some embodiments, the adaptor transfer case may comprise a chain drive assembly comprising including a first sprocket and a second sprocket, wherein: the input shaft includes the first sprocket; and the output shaft includes the second sprocket. The chain drive assembly may be configured so that the ratio of the first sprocket and second sprocket is from about 0.5:1 to about 5:1, such as from about 0.83:1 to about 2:1. For example, the chain drive assembly may be configured so that the ratio of the first sprocket and second sprocket is about 1:1.

In some embodiments, the adaptor transfer case comprises an oil pump and a manifold, operatively connected to a housing of the adaptor transfer case and configured to provide lubrication to one or more components of the adaptor transfer case.

In some embodiments, the lubricant manifold is positioned at an upper portion of the housing, to permit lubricant to enter an upper region of the adaptor transfer case.

As noted above, it may be desirable to reconfigure a Unimog vehicle (or other vehicle with a centrally-located (primary) transfer case) such that the adaptor transfer case is positioned at closer to the rear of the vehicle that the primary transfer case (for example, positioning the adaptor transfer case at least partially within a spatial envelope previously occupied by the original gearbox). In such an arrangement, an adaptor transfer case may be positioned behind a primary transfer case (i.e., typically relatively closer to a rear axle) and may have a single interface on a first (e.g. front) side of the adaptor transfer case to facilitate coupling a vehicle powertrain to an adaptor transfer case input shaft, and an adaptor transfer case output shaft to a primary transfer case input shaft.

Also disclosed herein is method of converting or reconfiguring the powertrain of a vehicle using an adaptor transfer case according to the present invention, the vehicle having a powertrain and a primary transfer case; said primary transfer case comprising: a primary input shaft configured to be driven by the powertrain; a first output shaft adapted to drive a first driveline; and a second output shaft adapted to drive a second driveline; said method comprising: installing the adaptor transfer case, said installing comprising: coupling the output shaft of the adaptor transfer case to the primary input shaft of the primary transfer case; and coupling the input shaft of the adaptor transfer case to a gearbox of the powertrain.

Instances in this specification where one element (e.g. part or component of the powertrain) is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Thus, when converting or reconfiguring the powertrain of a vehicle using an adaptor transfer case according to the present invention, the input shaft of the adaptor transfer case may be coupled to a gearbox of the powertrain, or an intermediate driveshaft. As noted above, the adaptor transfer case may be used to facilitate the reconfiguration of the powertrain so as to replace the original (potentially problematic) gearbox of a Unimog. Accordingly, in some embodiments, the method comprises removing a first gearbox from the vehicle before installing the adaptor transfer case; wherein the gearbox to which the input shaft of the adaptor transfer case is coupled is a second gearbox, different to the first gearbox. Often the adaptor transfer case is installed so as to be mounted directly, or very close to, the primary transfer case. The adaptor transfer case may be installed at least partially within a spatial envelope previously occupied by the first (e.g. original) gearbox.

The second (replacement) gearbox may be an automatic transmission assembly.

### Brief Description of the Drawings

Various embodiments of the present invention are described, by way of example only, with reference to the following drawings.
Figure 1 is a schematic top-down representation of an arrangement of a powertrain, including a primary transfer case and original gearbox, of a Unimog vehicle.
Figure 2 is a schematic top-down representation of an arrangement of a powertrain, including an embodiment of the adaptor transfer case of the present invention.
Figure 3 is a schematic illustration of an embodiment of the adaptor transfer case of the present invention mounted to a primary transfer case.
Figures 4A, 4B, 4C and 4D show, respectively, a rear- right side perspective view, a right side view, a front- right side perspective view, and a front-left side perspective view, of an internal mechanism of an embodiment of an adaptor transfer case, positioned relative to the housing of a primary transfer case.
Figures 5A and 5B are a schematic side and front illustrations of an embodiment of the adaptor transfer case comprising three gears.
Figure 5C is an annotated version of the view shown in Figure 5B.
Figures 6A and 6B are a schematic side and front illustrations of an embodiment of the adaptor transfer case comprising a chain-drive assembly.
Figures 7A and 7B show, respectively, a front-right side perspective view and a rear-left side perspective view of an embodiment of the adaptor transfer case positioned relative to the housing of a primary transfer case.
Figure 8 is an exploded view of an embodiment of an adaptor transfer case.
Figure 8A is a front view of the embodiment of the adaptor transfer case shown in Figure 8.
Figure 8B is a cross-sectional view of the adaptor transfer case shown in Figure 8A, along the line F-F.
Figure 9A is a front view of an embodiment of the adaptor transfer case, positioned relative to the housing of a primary transfer case.
Figure 9B is a cross-sectional view of the adaptor transfer case and the primary transfer case shown in Figure 9A, along the line R-R.
Figure 10 is a rear view of the adaptor transfer case shown in Figure 8.
Figure 11A is a cross-sectional view of a lubricant manifold of an embodiment of the adaptor transfer case.
Figure 11B is an exploded view of the lubricant manifold of Figure 11A, including associated hose connections.

### Detailed Description

In the following detailed description, reference is made to accompanying drawings which form a part of the detailed description. The illustrative embodiments described in the detailed description, depicted in the drawings and defined in the claims, are not intended to be limiting. Other embodiments may be utilised and other changes may be made without departing from the spirit or scope of the subject matter presented. It will be readily understood that the aspects of the present disclosure, as generally described herein and illustrated in the drawings can be arranged, substituted, combined, separated and designed in a wide variety of different configurations, all of which are contemplated in this disclosure.

The present invention is, in one aspect, directed to an adaptor transfer case configured for use in a vehicle having a powertrain and a primary transfer case; said primary transfer case comprising: a primary input shaft configured to be driven by the powertrain; a first output shaft adapted to drive a first driveline; and a second output shaft adapted to drive a second driveline; wherein said adaptor transfer case comprises: an input shaft configured to be driven by the powertrain; and an output shaft configured for coupling to the primary input shaft of the primary transfer case.

That is, the output shaft of the adaptor transfer case is adapted to drive into the primary transfer case input gear. The primary transfer case, as used herein, may be the pre-existing transfer case of the vehicle to which the adaptor transfer case is to be installed. In some embodiments, the primary transfer case is the original (i.e. factory) transfer case. However, it is contemplated that the adaptor transfer case of the present invention may be used in vehicles where there has been a prior change in the primary transfer case, so that the transfer case is not still the original one. Furthermore, in some cases, a new primary transfer case may be used as part of reconfiguring the powertrain, together with the adaptor transfer case.

The primary transfer case may comprise a primary input shaft that is rotatably supported. Typically, the primary input shaft is configured to receive rotational power from the original vehicle gearbox. Thus, the adaptor transfer case may be configured to provide rotational power to the primary input shaft.

A particular feature of various Unimog vehicles is the positioning of a gearbox towards the rear of the vehicle, behind the transfer case, such that the gearbox is relatively closer to the rear axle. This arrangement is atypical of all-wheel drive vehicles generally. While in some other all-wheel drive vehicles the transfer case and gearbox may be positioned towards the centre of the vehicle, it is common for these components to be arranged such that the gearbox is behind the engine, with the transfer case being located behind the gearbox, relatively closer to the rear axle.

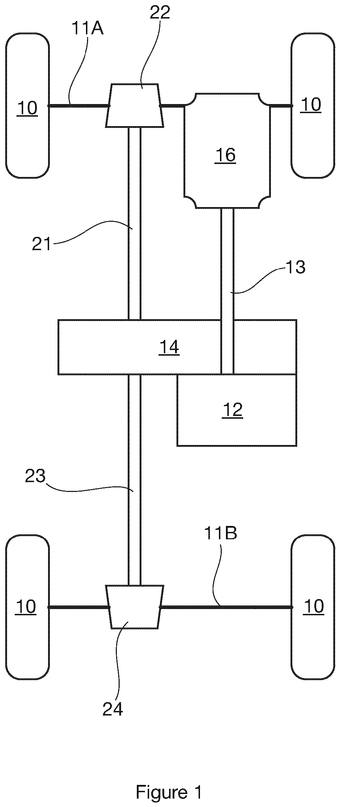

Figure 1 is a schematic is a schematic top-down representation of the arrangement of the powertrain, including a primary transfer case and original gearbox, of a Unimog vehicle. The vehicle has a primary transfer case 14 located in the middle of the chassis, between the front axle 11A and rear axle 11B extending between the wheels 10.

The primary transfer case 14 has a first output shaft adapted to drive the first driveline. The first driveline includes the driveshaft within the thrust tube 21 and the front differential 22. It will be appreciated that the first driveline is shown only schematically and in a simplified form in Figure 1. In many cases, the front driveline includes a torque tube and drive shaft connected to the differential pinion of the differential 22 at one end. At the other end of the driveshaft, it may be connected by universal joints to the primary transfer case 14 output flange (not shown) connected to the first output shaft.

The primary transfer case 14 also includes a second output shaft adapted to drive the second driveline. This structure of the second (rear) driveline is similar to the first (front) driveline. The second driveline includes the driveshaft within the thrust tube 23 and the rear differential 24. The second driveline is also shown only schematically and in a simplified form in Figure 1. In many cases, the second driveline includes a torque tube and driveshaft connected to the differential pinion of the differential 24 at one end. At the other end of the driveshaft, it may be connected by universal joints to the primary transfer case 14 output flange (not shown) connected to the second output shaft.

The gearbox 12 is positioned towards the rear of the vehicle, behind the primary transfer case 14 so that it is relatively closer to the rear axle 11B. This positioning of the gearbox 12 is a particular feature of certain Unimog vehicles and atypical of all-wheel drive vehicles generally. While in some other all-wheel drive vehicles the transfer case and gearbox may be positioned towards the centre of the vehicle, it is common for these components to be arranged so that the gearbox is behind the engine, often connected thereto via a bellhousing, and the transfer case is located behind the gearbox, relatively closer to the rear axle.

As shown in Figure 1, the gearbox 12 may be directly adjacent to the transfer case 14. In some Unimogs, the gearbox 12 is directly mounted to the primary transfer case 14 although both have their own housing. In some other Unimogs, the gearbox 12 and primary transfer case 14 may be mounted together and located within a common housing.

In certain Unimogs, as shown in Figure 1, the gearbox 12 is connected to the engine 16 via a driveshaft 13.

The location of the gearbox 12 relative to the primary transfer case 14 can present challenges in reconfiguring and/or converting the transmission of a Unimog. As noted above, it may be advantageous to retain the primary transfer case 14 in the vehicle.

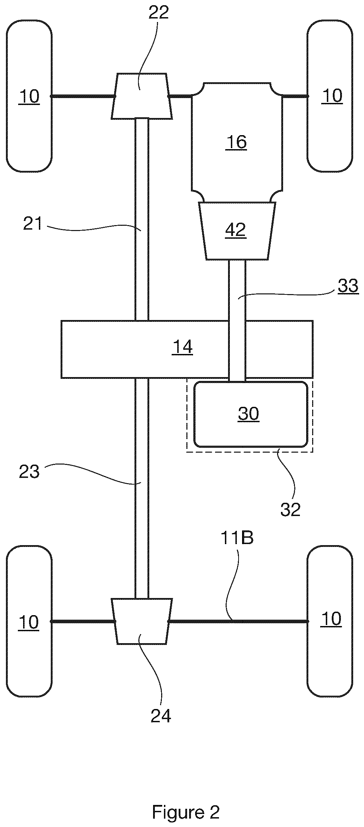

Figure 2 illustrates an example of a drivetrain arrangement, based on the drivetrain illustrated in Figure 1, in which the gearbox 12 has been removed, leaving an original gearbox spatial envelope 32. Like components in Figures 1 and 2 have been denoted with the same reference numerals.

An adaptor transfer case 30 in accordance with the present invention has been coupled with the primary transfer case 14 so that the adaptor transfer case 30 is wholly located within the original gearbox spatial envelope 32. In some other embodiments, an adaptor transfer case may be at least partially located within the original gearbox spatial envelope 32. In the embodiment of Figure 2, the adaptor transfer case 30 is disposed in a spatial envelope that is immediately adjacent to the primary transfer case 14 that is defined by the envelope previously occupied by the original gearbox (the gearbox 12 of Figure 1).

In some embodiments of the present invention, the adaptor transfer case is configured for mounting at least partially within a spatial envelope immediately adjacent the primary transfer case. This may advantageously be a spatial envelope partially or wholly provided by removing a previously installed component (such as the gearbox), but it is not limited thereto. The adaptor transfer case may be directly coupled to the primary transfer case. For example, the adaptor transfer case may be configured to use the same mounting points as those used for mounting the original gearbox to the transfer case. In some other embodiments, a coupling component may be used to couple the adaptor transfer case and the primary transfer case in such a way that the adaptor transfer case is still located relatively close to the primary transfer case. In some embodiments, being at least partially within a spatial envelope immediately adjacent the primary transfer case includes part of the adaptor transfer case being within 100mm of the primary transfer case, such as within 50mm.

The output shaft of the adaptor transfer case may include an output flange configured for connecting with an input flange of the primary transfer case.

Disclosed herein is a method of converting or reconfiguring the powertrain of a vehicle using an adaptor transfer case according to the present invention, the vehicle having a powertrain and a primary transfer case; said primary transfer case comprising: a primary input shaft configured to be driven by the powertrain; a first output shaft adapted to drive a first driveline; and a second output shaft adapted to drive a second driveline; said method comprising: installing the adaptor transfer case, said installing comprising coupling the output shaft of the adaptor transfer case to the primary input shaft of the primary transfer case; and coupling the input shaft of the adaptor transfer case to a gearbox of the powertrain. Some embodiments of this method include removing a first gearbox from the vehicle before installing the adaptor transfer case; wherein the gearbox to which the input shaft of the adaptor transfer case is coupled is a second gearbox, different to the first gearbox.

In the embodiment of Figure 2, the gearbox 12 of Figure 1 has been replaced with a new gearbox 42. In the embodiment of Figure 2, the gearbox 42 is mounted at the rear of the engine 16 and then connected to the adaptor transfer case 30 via a driveshaft 33. It will be appreciated that different configurations of transmission components may be used between the adaptor transfer case and engine in order to reconfigure or convert the powertrain of the vehicle. In some embodiments, both the engine 16 and the gearbox 12 may be replaced.

The adaptor transfer case of the present invention comprises an input shaft configured to be driven by the vehicle powertrain. The input shaft may comprise an engaging portion. In some embodiments, the engaging portion comprises an input flange configured to connect to the vehicle drivetrain, such as the gearbox or an intermediate driveshaft. In some other embodiments, the engaging portion comprises a yoke connector. The engaging portion may be configured for coupling to the upstream components of the powertrain. For example, the engaging portion may be configured for coupling with an automatic transmission assembly that replaces the original gearbox.

As illustrated in Figure 2, the adaptor transfer case 30 is operatively connected to a driveshaft 33 at a first (i.e. front) side and is positioned towards the rear of the primary transfer case 14.

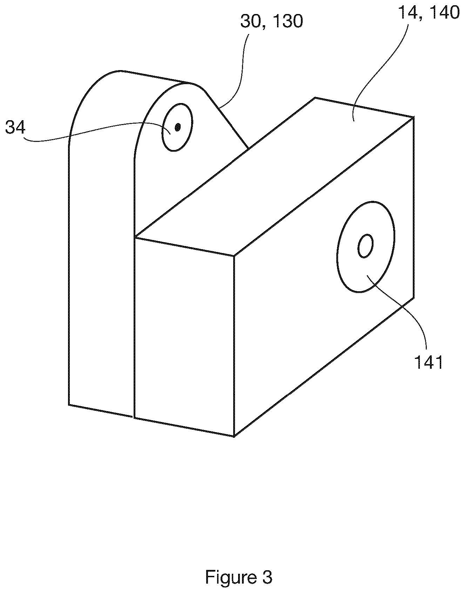

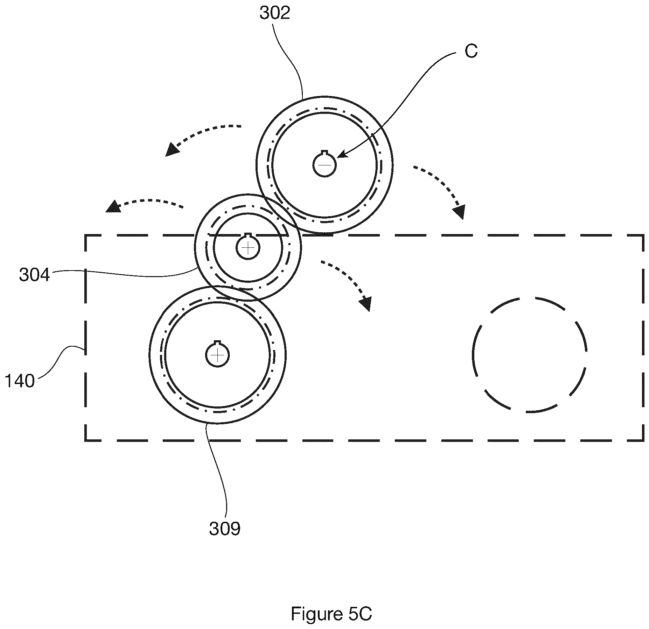

Figure 3 is a schematic illustration of an embodiments of the adaptor transfer case 30 of the present invention mounted to a primary transfer case 14. In this embodiment, the adaptor transfer case 30, including the housing 130, is directly mounted to the primary transfer case, via the housing 140 of the primary transfer case, using the mounting provided for the original gearbox. The input engaging portion 34 (e.g. input flange) is configured to couple to the upstream components of the powertrain (driveshaft, gearbox, engine etc). In addition, in this embodiment, the input engaging portion 34 is located so as to generally correspond of the positioning of the input of the original gearbox. As described below in further detail with reference to Figure 5C, the location of the input shaft of the adaptor transfer case can be selected depending on the desired geometry of the upstream components of the powertrain. Thus, the configuration of the adaptor transfer case may be selected based on the type and location of the new powertrain components, as well as the type of vehicle in which the adaptor transfer case is to be installed, so as to align the output shaft of the adaptor transfer case with the primary input shaft of the primary transfer case and provide the input shaft of the adaptor case at a desired location.

As mentioned above, the adaptor transfer case of the present invention may be particularly advantageous when converting or reconfiguring the powertrain of vehicles having a centrally-located transfer case. In these vehicles, such as Unimogs, the original gearbox may be located closer to the rear of the vehicle than the (primary) transfer case. During conversion or reconfiguration of the powertrain, the position of the gearbox may be changed and the adaptor transfer case can be located in a spatial envelope that permits effective component packaging without requiring the original (primary) transfer case to be moved or replaced. Ideally, the adaptor transfer case is configured so that no modification of the original transfer case is required.

In order to locate the adaptor transfer case in a spatial envelope that is closer to the rear of the vehicle than the primary transfer case, the input shaft of embodiments of the adaptor transfer case may be configured to be coupled to the powertrain at a first side of the adaptor transfer case, and the output shaft may configured to be coupled to the primary input shaft of the primary transfer case at the first side of the adaptor transfer case.

By using an adaptor transfer case in accordance with the present invention, the vehicle may be converted to a divorced transfer case. In the context of automotive transmissions, the term "divorced" refers to a drivetrain configuration where the gearbox and transfer case are separate units located in different parts of the vehicle. That is, the gearbox may be located further down the driveline. This contrasts with a "married" drivetrain, where the gearbox and transfer case are directly connected or integrated into a single unit. That is, the conventional configuration of a Unimog is typically a married transfer case.

By separating the gearbox and transfer case, it may allow for a more versatile powertrain that can be tailored to specific applications. In some embodiments, the powertrain may be reconfigured so that: the engine is connected to the gearbox, and a driveshaft then connects the gearbox to the adaptor transfer case, which is then connected to the transfer case. Known vehicle conversion methodologies can be used to mount a new gearbox and/or engine to the vehicle. This may include adapting cross members and/or cab mounts so as to adjust the component packaging to accommodate the new powertrain configuration.

In some embodiments, the adaptor transfer case can enable the gearbox of the vehicle to be replaced with a different manual gearbox (compared to the factory gearbox). For example, the manual gearbox may be one that can be more readily and affordably maintained. Alternatively, or additionally, the manual gearbox may be selected to provide a different combination of gears (e.g. different number and/or ratios of gears).

By using an adaptor transfer case in accordance with the present invention, it may be possible to more readily convert a Unimog vehicle to an automatic transmission. That is, the adaptor transfer case may be coupled to an automatic transmission (gearbox) assembly which, optionally, is connected to a new engine. The new engine may be a different engine to the pre-existing engine of the vehicle. In some cases, the new engine may be a more modern engine than the factory engine of the vehicle (or the pre-existing engine, such as in cases where the factory engine has already been replaced with a different engine). The engine may be particularly suitable for use with the automatic transmission.

In some embodiments, the adaptor transfer case may be a "drop box". That is, it can be vertically located into the spatial envelope. As described above, the adaptor transfer case is typically mounted adjacent to the primary transfer case, such as in the location of the original gearbox. The location of the transfer case in a Unimog can vary depending on the model and model year but, in general, it is located in the centre of the chassis, between the front and rear axles. It is typically mounted on the frame rails. On some models, the transfer case may have a separate housing, while on other models, it may be integrated into the gearbox housing. For example, in the Unimog Models U140 and U100, the transfer case is integrated into the gearbox housing.

The primary transfer case may extend from chassis rail to chassis rail across the chassis. Alternatively, in some embodiments, the primary transfer case may be located to the right of left side of the chassis. As noted above, thrust tubes from the front and rear drivelines of Unimogs transfer loads to the housing of transfer case. Accordingly, the housing will be configured to withstand the loads encountered during use and may have fore- and aft-plates that are robustly configured. As shown in Figures 1, 2 and 3, albeit schematically, the primary transfer case 14 may have a generally rectangular profile. The adaptor transfer case may be configured to abut a face of the primary transfer case.

The adaptor transfer case of the present invention is typically configured so that the input and output shafts rotate in the same direction. In some embodiments, the adaptor transfer case is gear-driven. In some other embodiments, the adaptor transfer case is chain-driven.

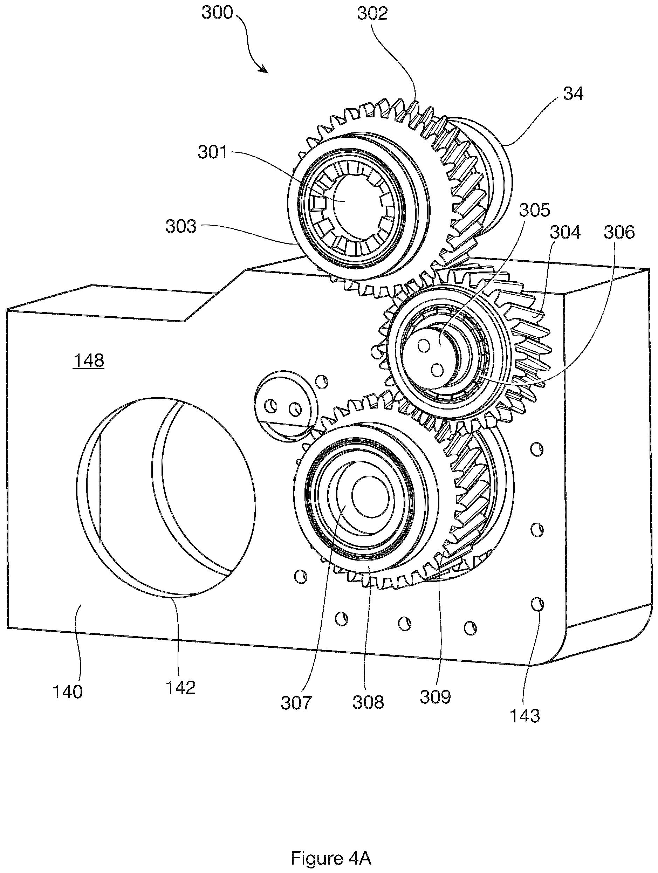

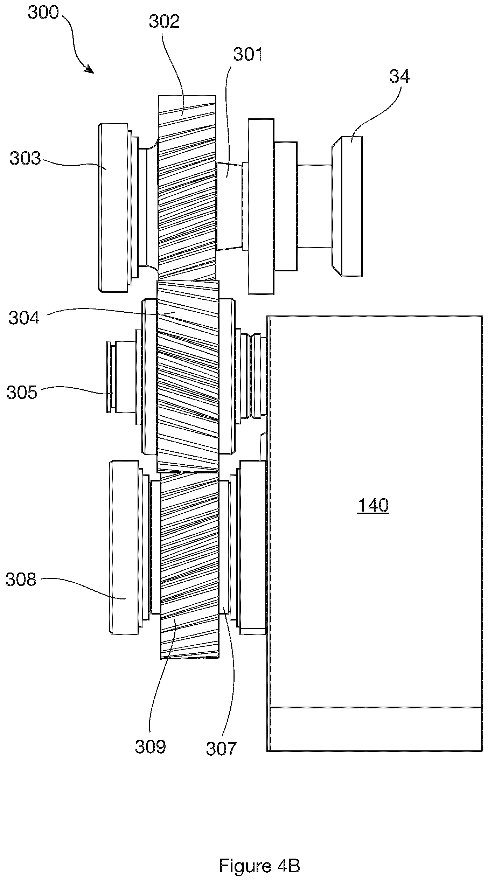

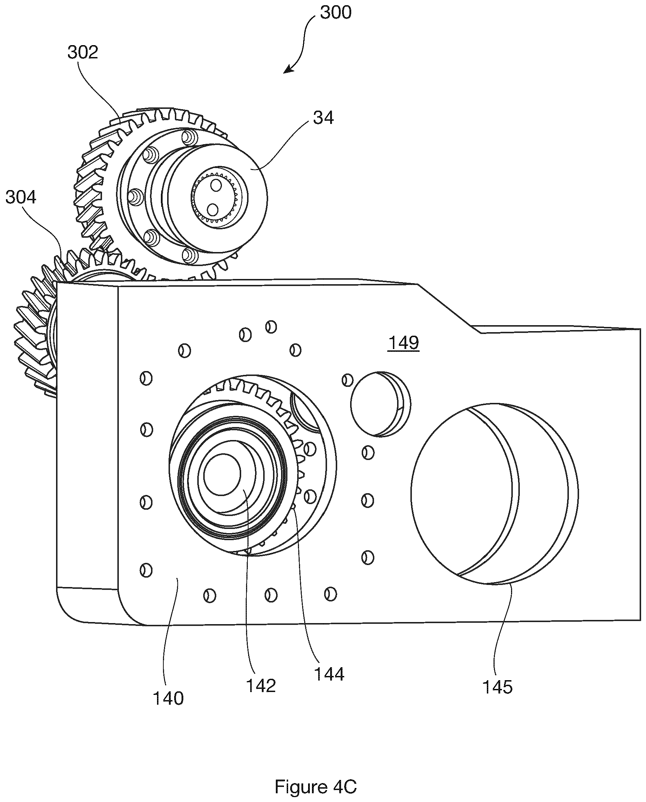

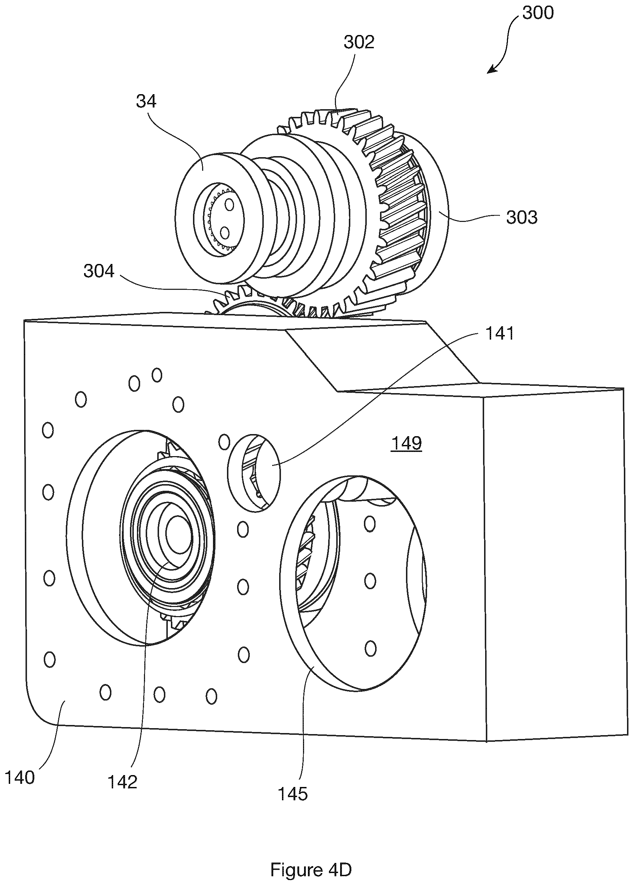

Figures 4A-4D show the internal mechanism 300 (without a housing) of an embodiment of a gear-driven adaptor transfer case in accordance with the present invention. Thus, Figures 4A-4D illustrate a gear assembly of an embodiment of the adaptor transfer case. The adaptor transfer case includes an input shaft 301 configured to be driven by the powertrain. The input shaft comprises an input engaging portion 34 in the form of an input flange (see Figures 4B, 4C and 4D). In practice, the input flange may include mounting holes configured to be used to couple to the upstream powertrain components. That is, the input engaging portion 34 is configured to couple to the upstream powertrain components.

The internal mechanism 300 is shown with reference to the housing 140 of the primary transfer case. Most of the mechanism of the primary transfer case has been omitted from this illustration. The output shaft 307 in this illustration is coupled to the primary input shaft 142 of the primary transfer case. The primary input shaft 142, best seen in Figures 4C and 4D, is only partially shown, together with the first gear 144 of the primary input shaft. Also shown is the layshaft 141 of the primary transfer case (see Figure 4D).

As illustrated in Figure 4B, the input shaft 301 (more specifically, the input engaging portion 34) and an engaging portion of the output shaft 307 (for engagement with the primary input shaft 142) are each positioned at a first (i.e. front) side of the adaptor transfer case - that is, the side of the adaptor transfer case that faces the primary transfer case once installed.

In the view shown in Figure 4A, the mounting holes 143 (only one labelled) in the aft-plate 148 of the housing 140 are shown. These mounting holes 143 may be used to mount the housing of the adaptor transfer case.

Also shown (best seen in Figure 4A) is the opening 142 in the aft-plate 148 of the housing 140 through which the second output shaft coupled to the second (rear) driveline can pass. On the opposite side of the housing 140, in the fore-plate 149, is the opening 145 through which the first output shaft coupled to the first (front) driveline can pass (see Figures 4C and 4D).

Returning to the mechanism 300 of the adaptor transfer case, the input shaft 301 includes a first gear 302 configured to engage an intermediate gear 304 mounted on a fixed shaft, a layshaft 305, via a bearing 306, permitting rotation of the gear 304 as the input shaft 301 is driven by the powertrain. The input shaft 301 is supported within the housing of the adaptor transfer case by a shaft bearing 303.

The output shaft 307 includes a second gear 309 that engages with the intermediate gear 304. Thus, the input shaft 301 and output shaft 307 are configured to rotate in the same direction. Similarly to the input shaft 301, the output shaft 307 is supported within the housing by a shaft bearing 308. As can be seen from Figures 4A-4D, the rotational axis of the output shaft 307 is aligned with the rotational axis of the primary input shaft 142 of the primary transfer case.

In the illustrated embodiment, the first gear 302 on the input shaft 301 is an integrated gear (i.e., the first gear 302 and the input shaft 301 have a unitary construction), while the second gear 309 and output shaft 307 are separate components that are operatively connected to one another. However, it will be appreciated that other configurations can be used in the adaptor transfer case of the present invention. For example, both the first gear and the second gear may be integrated gears. Alternatively, one or both of the input shaft and output shaft may be separate components to their respective first and second gears.

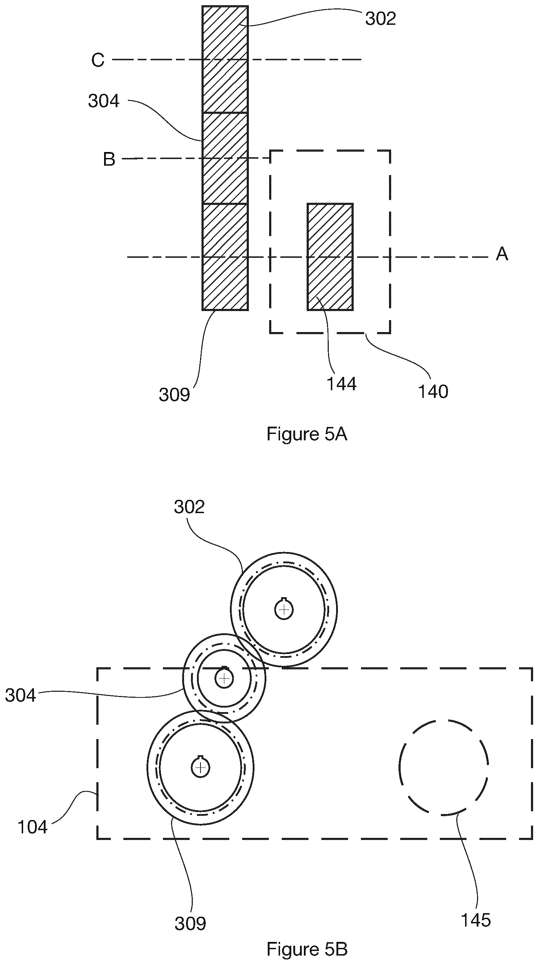

Figures 5A and 5B are schematic side and front views of the gears in the internal mechanism of an adaptor transfer case. The positioning of the gears relative to the housing 140 (shown in broken lines) is shown. The first gear 302 of the input shaft is shown, with an axis of rotation C illustrated. As with the embodiment of Figures 4A-4D, the first gear 302 is configured to engage an intermediate gear 304 (having an axis of rotation B).

The output shaft includes a second gear 309 that engages with the intermediate gear 304. The second gear 309 and the first gear 144 of the primary input shaft of the primary transfer case are concentric about an axis of rotation A. In practice, as described above, the output shaft of the adaptor transfer case will be coupled to the input shaft of the primary transfer case.

Also shown (in broken lines) is the opening 145 in the housing 140 through which the first output shaft coupled to the first (front) driveline can pass.

In some embodiments, like those illustrated in Figures 4A-4D, 5A and 5B, the adaptor transfer case is configured with three gears, this being the minimum number for a gear-driven transfer case to ensure the input shaft and output shaft rotate in the same direction. In some other embodiments, the gear train may comprise more than three gears in order to provide the desired ratio, as well as the desired positioning of the input and output shafts of the adaptor transfer case. For example, in some embodiments, to provide the desired offset between the input and output shafts (e.g. the vertical and/or horizontal offset) more than three gears may be used in the gear assembly.

In some embodiments, the gears of the adaptor transfer case are configured to provide a 1:1 ratio. Thus, in some embodiments the adaptor transfer case is configured to maintain the same rotational speed at input and output. Such embodiments of the adaptor transfer case may be selected when the adaptor transfer case is used with an automatic gearbox assembly. In these embodiments, the automatic gearbox may perform all the range selection and gear changing.

It will be appreciated that adaptor transfer case can be configured to provide the desired output. The output may be selected to configure the adaptor transfer case for use on vehicles with different tyre diameters, different differential ratio and/or different transmission ratios. As such, the present invention is not limited to embodiments providing a 1:1 ratio. In some embodiments, the gears may be configured to provide a 1:2 (0.5:1) ratio or lower, such as a 0.83:1 ratio. In some other embodiments, the gears may be configured to provide a 5:1 ratio or greater, such as a 2:1 ratio.

With reference to Figure 5A, the configuration of the gears 302, 304 and 309 is determined by the location of axis A. That is, the rotation axis of the input shaft of the primary transfer case provides a set point for the configuration of the mechanism for the adaptor transfer case as, typically, the output shaft of the adaptor transfer case will be aligned with the input shaft of the primary transfer case. However, the location of the input shaft of the adaptor transfer case can be varied to suit the desired configuration of the powertrain upstream. Figure 5C is a version of Figure 5B that has been annotated with arrows to show how the positions of the first gear 302 and intermediate gear 304 can be shifted while maintaining the position of the second gear 309, so that the location of the input shaft can be moved. Through the use of the adaptor transfer case, there may be design freedom in selecting the location of the connection point with the remainder of the powertrain, provided that there is sufficient clearance between axis C and the top of the primary transfer case housing 140.

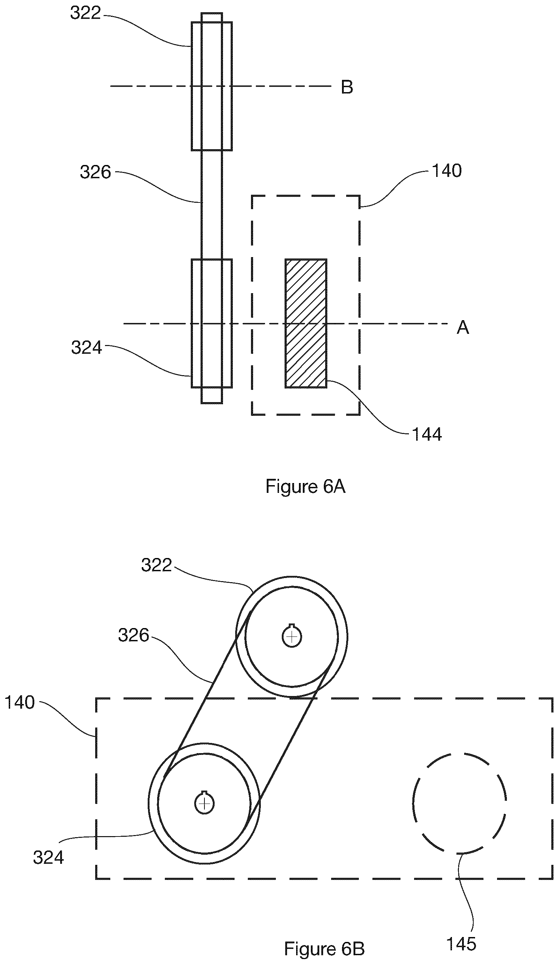

Figures 6A and 6B are schematic side and front views of the internal mechanism of a chain-driven adaptor transfer case. The positioning of the sprockets relative to the housing 140 (shown in broken lines) is shown. The first sprocket 322 of the input shaft is shown. The input shaft rotates above the axis of rotation B.

The output shaft includes a second sprocket 324. Both the first and second sprockets 322, 324 engage with a chain 326 such that, as the input shaft of the adaptor transfer case is driven by the vehicle powertrain, the output shaft is driven via the chain 326. The second sprocket 324 and the first gear 144 of the primary input shaft of the primary transfer case are concentric about the axis of rotation A. In practice, as described above, the output shaft of the adaptor transfer case will be coupled to the input shaft of the primary transfer case.

Also shown (in broken lines) is the opening 145 in the housing 140 through which the first output shaft coupled to the first (front) driveline can pass.

In some embodiments, the sprockets of the adaptor transfer case are configured to provide a 1:1 ratio. Thus, in some embodiments the adaptor transfer case is configured to maintain the same rotational speed. Such embodiments of the chain-driven adaptor transfer case may be selected when the adaptor transfer case is used with an automatic gearbox assembly. In these embodiments, the automatic gearbox may perform all the range selection and gear changing.

It will be appreciated that chain-driven adaptor transfer cases can be configured to provide the desired output. The output may be selected to configure the adaptor transfer case for use on vehicles with different tyre diameters, different differential ratio and/or different transmission ratios. As such, the present invention is not limited to embodiments providing a 1:1 ratio. In some embodiments, the sprockets may be configured to provide a ratio within the range of from about 0.5:1 to about 5:1, such as about an 0.83: 1 ratio. In some other embodiments, the sprockets may be configured to provide a 2:1 ratio.

Similarly to the gear-driven embodiments of the adaptor transfer case, the output shaft of the chain-driven adaptor transfer case may be aligned with the input shaft of the primary transfer case. However, the location of the input shaft of the adaptor transfer case can be varied to suit the desired configuration of the powertrain upstream. The chain-drive mechanism affords some design freedom in selecting the location first sprocket 322, provided that there is sufficient clearance between axis B and the top of the transfer case housing 140. Thus, the location of the engagement point for the input shaft may be selected based on the desired configuration for the upstream components.

In the illustrated embodiments, a single input:output ratio is provided by the adaptor transfer case. However, it will be appreciated that the adaptor transfer case may be configured with a gear set and a suitable shifting mechanism such that plural ratios may be provided. The range of ratios provided may be from about 0.5: 1 to about 5:1, such as from about 1:1 to about 2:1. In some embodiments, the adaptor transfer case is configured to provide two, three or more different ratios.

In some embodiments, the adaptor transfer case may be configured with a set of gears, where the ratio may be selected by sliding gears (such as a gear and pinion) into mesh.

In some other embodiments, the adaptor transfer case comprises a gear set and a sliding column, together with a fork arrangement, configured to select gears from the set so as to provide a range of ratios.

Other methods of providing a range of gears, known from the methodologies employed in automotive gearboxes, may be employed in embodiments of the adaptor transfer case of the present invention so as to provide a range of gears with suitable ratios.

In some embodiments, the adaptor transfer case may be configured to permit the desired ratio to be selected prior to installation of the adaptor transfer case. That is, in use, the ratio will be fixed. Alternatively or additionally, the adaptor transfer case may be configures such that, after installation, a ratio may be selected from the available range when the vehicle is not in use, so as to provide the desired fixed ratio for the proposed next use of the vehicle.

In some other embodiments, the adaptor transfer case may be configured with a shifting mechanism, to permit the changing of gears during use. For example, in some Unimogs, the primary transfer case is configured to use a dog clutch arrangement to enable all-wheel drive or two-wheel drive to be selected. The adaptor transfer case may, for example, provide a low range ratio and a higher range ratio, that can be selected using a shifting mechanism that can be actuated by a user from within the cab of the vehicle during use, in addition to selecting all-wheel drive or two-wheel drive. In some cases, it may be desirable to select the low range ratio of the adaptor transfer case in addition to all-wheel drive for extreme off-road conditions. The higher ratio may be selected (optionally in addition to two-wheel drive) for ordinary road use.

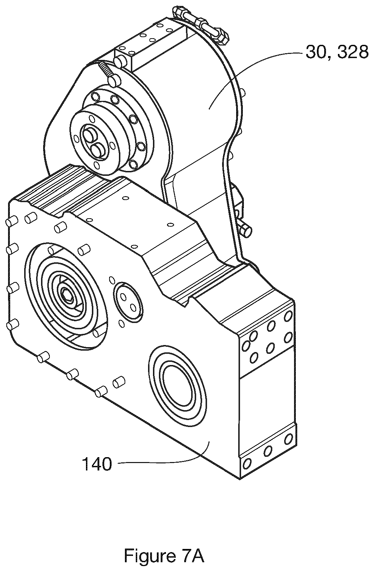

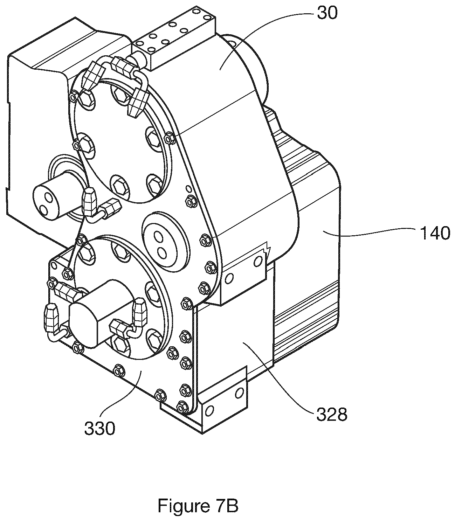

Figures 7A and 7B illustrate an adaptor transfer case 30 according to an embodiment of the present invention, in which the adaptor transfer case components are arranged within a housing that comprises a housing body 328 and housing cover plate 330. The adaptor transfer case 30 is shown in position relative to primary transfer case housing 140, in which a first (i.e. front) side of the housing is immediately adjacent to the rear of the primary transfer case housing 140. The housing cover plate 330 is positioned at a second (i.e. rear) side of the adaptor transfer case.

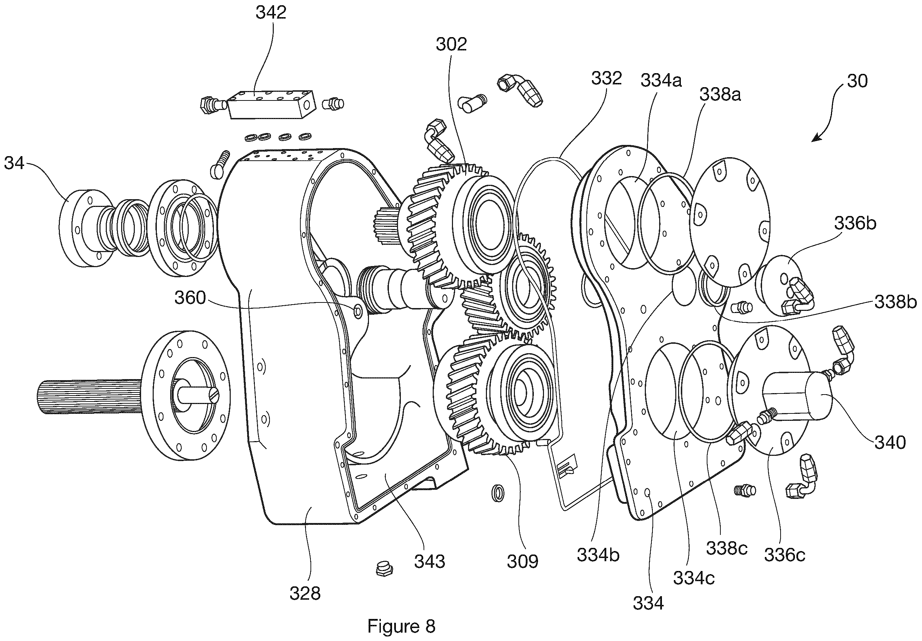

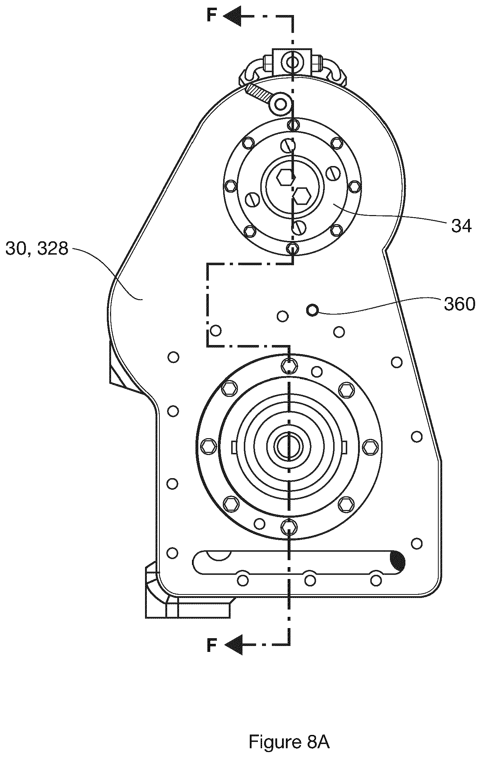

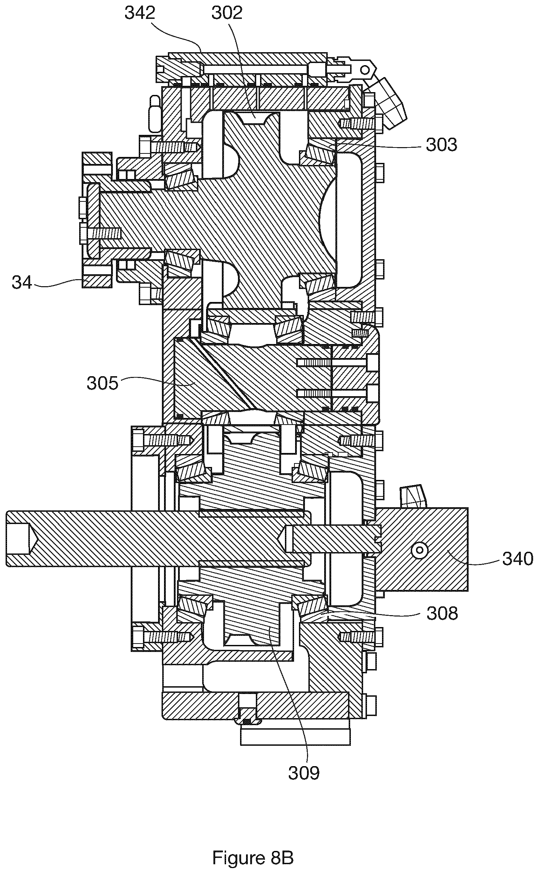

Figure 8 provides an exploded view of the embodiment of the adaptor transfer case 30 shown in Figures 7A and 7B. The adaptor transfer case 30 comprises a housing, including the housing body 328 and housing cover plate 330 shown in Figure 7B. In use, the housing body 328 and housing cover plate 330 are sealingly connected using a housing O-ring 332. The housing cover plate 330 itself comprises a series of apertures 334a-334c, which are configured to be aligned with the central axes of the first gear 302, the intermediate gear 304 and the second gear 309, respectively. The apertures 334a-334c are sealingly connected to corresponding cover discs 336a-336c using O-rings 338a-338c.

Figure 8A provides a front view of the housing body 328 of the adaptor transfer case 30. Figure 8B shows a cross-section of the adaptor transfer case 30 along the line F-F shown in Figure 8A, illustrating the relative positioning of the first gear 302, the layshaft 305 on which the intermediate gear 304 is mounted, and the second gear 309.

Figure 8A illustrates the first side of the adaptor transfer case (and its housing) which, in use, provides an interface to facilitate connection of the adaptor transfer case with the vehicle powertrain (via the input engaging portion 34) and the primary input shaft of the primary transfer case 140 (via the adaptor transfer case output shaft 307). As discussed above, this interface arrangement may advantageously permit the installation of the adaptor transfer case at the rear of the primary transfer case (for example, in a spatial envelope vacated by removal of an original gearbox).

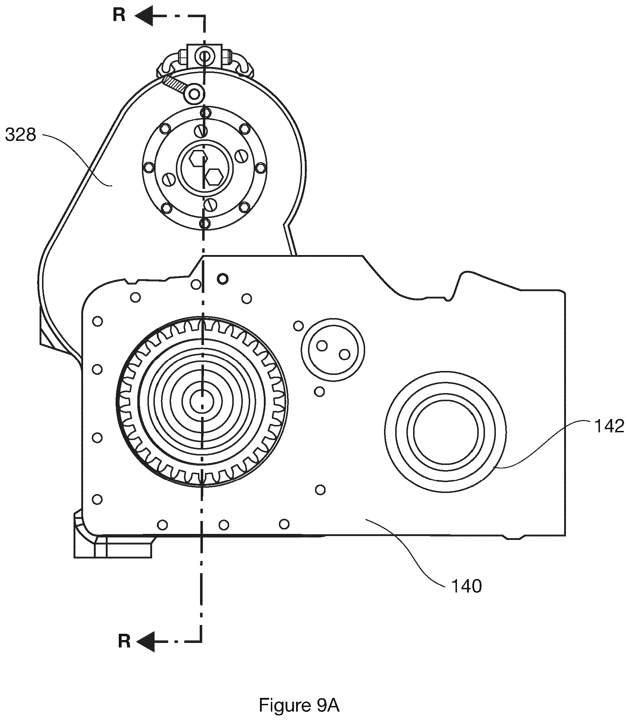

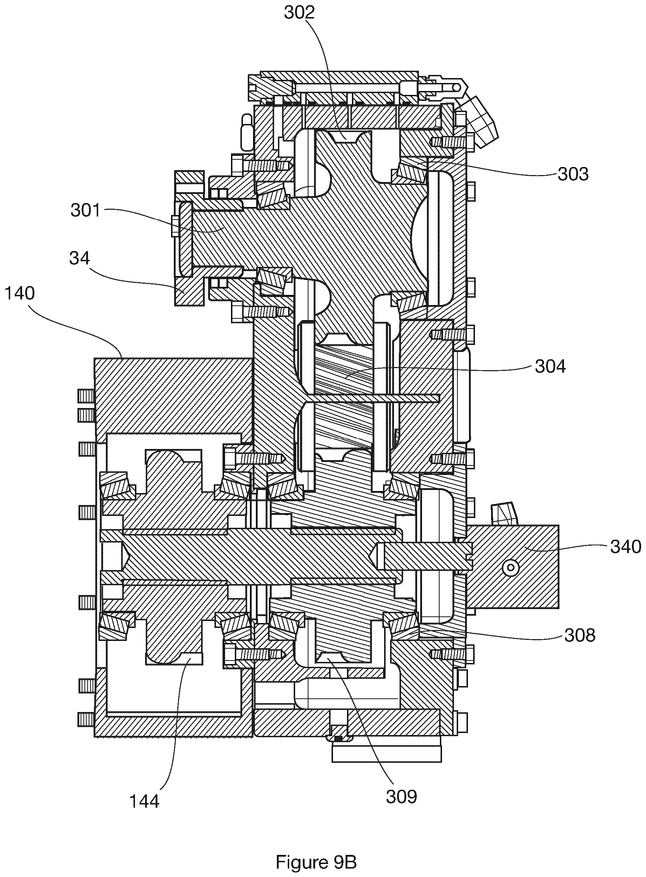

Figure 9A provides a front view of the housing body 328 of the adaptor transfer case 30, arranged in an operative position relative to the primary transfer case housing 140. Figure 9B shows a cross-section of the adaptor transfer case and the primary transfer case along the line R-R shown in Figure 9A. The cross-sectional view of Figure 9A illustrates the relative position of first gear 302, intermediate gear 304 and second gear 309, where the second gear 309 is operatively connected to the first gear 144 of the primary transfer case.

In use, the adaptor transfer case 30 is partially filled with a lubricant (e.g. a lubricant oil). The adaptor transfer case 30 comprises a fill port 345 through which lubricant may be inserted into the housing body. The housing body includes a (wet) sump 343 for containing a supply of the lubricant. The lubricant is distributed through the interior of the transfer case via splash lubrication. In one or more embodiments, movement of the second gear 309 causes movement of lubricant which settles at or towards the lower end of the adaptor transfer case, thereby splashing the lubricant onto the intermediate gear 304 and the first gear 302, which are positioned above the second gear 309.

In some embodiments, splash lubrication alone may be sufficient. In the illustrated embodiment, the adaptor transfer case 30 also comprises an oil pump 340 positioned adjacent to the second gear 309 and a lubricant manifold 342 positioned at an upper end of the adaptor transfer case housing to circulate the lubricant. This system for lubricant distribution can be used to supplement distribution via the splash lubrication described above, which alone may not always be fully effective in sufficiently lubricating components positioned closer to the upper end of the housing. The illustrated arrangement may ensure better distribution of the lubricant in the upper region of the transfer case than splash lubrication alone. In some embodiments, the oil pump 340 is configured to extract lubricant from the interior of the transfer case housing via a suction port 344, and to distribute the lubricant to the lubricant manifold 342 which, in turn, redistributes the lubricant into the interior of the housing from its upper end.

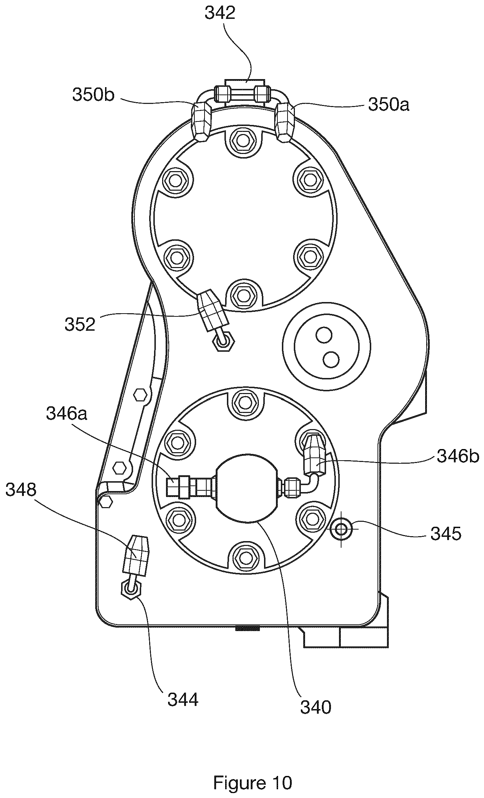

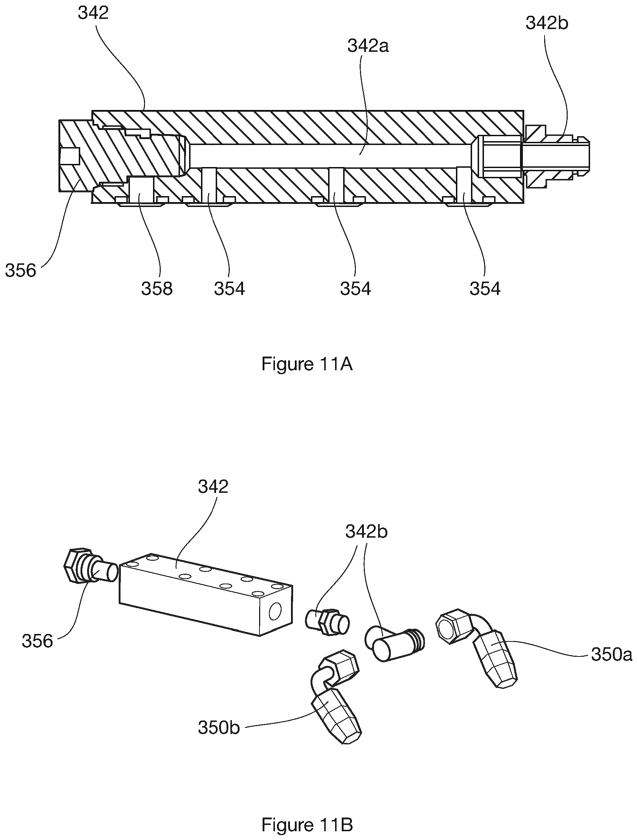

Figures 10, 11A and 11B provide an illustration of the components of the adaptor transfer case of Figure 8 that permit transfer of lubricant through the adaptor transfer case. The oil pump 340 is connected to a first hose end 346a and a second hose end 346b. The suction port 344 is connected to a hose end 348. The lubricant manifold 342 comprises a branch connector 342b which is operatively connected to an interior channel 342a of the lubricant manifold 342, a first hose end 350a and a second hose end 350b, to provide a fluid pathway between the interior channel 342a, the first hose end 350a and the second hose end 350b. The adaptor transfer case also comprises a central hose end 352 positioned vertically above the second gear 309.

In use, the first hose end 346a associated with the oil pump 340 is connected to the hose end 348 associated with the suction port 344 via a hose (not shown), such that operation of the oil pump 340 draws lubricant through the suction port 344 via the hose end 348 and into the oil pump via first hose end 346a. The second hose end 346b associated with the oil pump 340 is connected to the first host end 350a associated with the lubricant manifold 342 via a hose (not shown), such that lubricant is pumped out of the oil pump 340 through the second hose end 346b and into the interior channel 342a of the lubricant manifold 342 via the first hose end 350a and branch connector 342a. The lubricant manifold 342 is configured such that the lubricant flows from the interior channel 342a into conduits 354, through which the lubricant is dispensed into the upper region of the adaptor transfer case housing.

The second hose end 350b associated with the lubricant manifold 342 is also connected to the central hose end 352 via a hose (not shown). The central hose end 352 is connected to a channel 360 that extends from the housing cover plate 330 of the adaptor transfer case housing to a front side of the housing, adjacent to the primary transfer case 14. The channel 360 is isolated from the interior of the adaptor transfer case housing to permit lubricant to pass through the channel towards the primary transfer case 14. The channel 360 is connected to a corresponding lubrication channel of the primary transfer case (not shown), to allow the distribution of lubricant to the interior of the primary transfer case housing (i.e. to lubricate the gears and other interior components of the primary transfer case). This configuration allows a pressurized oil feed of the primary transfer case to be maintained after the installation of the adaptor transfer case.

As illustrated in Figures 11A and 11B, the lubricant manifold 342 comprises a check valve 356, which may be actuated in the event that pressure in the lubricant manifold 342 exceeds a threshold pressure (i.e. cracking pressure). In the illustrated embodiments, the check valve 356 is a spring-loaded ball poppet valve, although in alternative embodiments, other suitable check valves may be substituted depending on particular requirements of the system (e.g., a diaphragm check valves, or lift check valve). In these embodiments, the check valve 356 is an adjustable check valve, whereby the cracking pressure is selected by a user prior to installation to meet specific requirements for the adaptor transfer case system. When the cracking pressure is exceeded, the check valve 356 is actuated to permit lubricant to pass through the valve and to drain through a drainage channel 358 to reduce pressure in the lubricant manifold.

In the illustrated embodiments, the cracking pressure of the adjustable check valve 356 is selected as 5 bar (0.5 MPa). In other embodiments, the cracking pressure of the check valve maybe selected from the ranges: 0.1 - 50 bar (0.01 - 5 MPa); 0.2 - 20 bar (0.02 - 2 MPa); 0.35 - 10 bar (0.035 - 1 MPa); or 0.35 - 5 bar (0.035 - 0.5 MPa). Specific values of cracking pressure may be selected as 0.35 bar (0.035 MPa), 0.5 bar (0.05 MPa), 1 bar (0.1 MPa), 2 bar (0.2 MPa), 2.5 bar (0.25 MPa), 5 bar (0.5 MPa) or 10 bar (1 MPa). In the illustrated embodiments, the check valve 356 has a maximum operating pressure of 350 bar (35 MPa), although an alternative maximum operating pressure may be selected depending on the particular system requirements. A non-adjustable check valve may be used as an alternative to an adjustable check valve in the adaptor transfer case system, in order to select a desired (fixed) cracking pressure and maximum operating pressure.

It is envisaged that the interior of the adaptor transfer case housing may be provided with one or more channels or guides to direct lubricant that flows from the conduits 354 of the lubricant manifold 342 to desired regions or to desired components within the transfer case housing (e.g. the first gear 302 and/or the intermediate gear 304), although said channels/guides are not shown in Figure 8.

As described above, embodiments of the adaptor transfer case may utilize both splash lubrication and a lubricant distribution system including the oil pump and lubricant manifold concurrently. However, alternative embodiments may rely solely on said lubricant distribution system, without splash lubrication, which may reduce the amount of lubricant contained within the adaptor transfer case housing at a given time.

The adaptor transfer case may be used advantageously with the primary transfer case and other powertrain components to enhance or optimize the vehicle transmission.

Embodiments of the adaptor transfer case described above with reference to Figures 7A-10 are adapted for installation rearwards of the primary transfer case (i.e., having the input shaft and output shaft couplable to their respective vehicle components at a first (front) side of the adaptor transfer case). However, it is alternatively envisaged that a similar adaptor transfer case may be provided which is adapted for installation between the vehicle powertrain and the primary transfer case (i.e., forwards of the primary transfer case). In this alternative, the adaptor transfer case comprises the same components as described above, albeit with the output shaft adapted for coupling with the primary input shaft of the primary transfer case at a second (rear) side of the adaptor transfer case, opposite to the first (front) side. In such cases, the position of the oil pump 340 can be adjusted to avoid interfering with the coupling between the output shaft and the primary input shaft of the primary transfer case.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

As used herein, the singular forms "a," "an," and "the" designate both the singular and the plural, unless expressly stated to designate the singular only.

The term "about" and the use of ranges in general, whether or not qualified by the term about, means that the number comprehended is not limited to the exact number set forth herein, and is intended to refer to ranges substantially within the quoted range while not departing from the scope of the invention. As used herein, "about" will be understood by persons of ordinary skill in the art and will vary to some extent on the context in which it is used. If there are uses of the term which are not clear to persons of ordinary skill in the art given the context in which it is used, "about" will mean up to plus or minus 10% of the particular term.

In addition, where dimensions are described herein, it will be appreciated that plus or minus (±) typical manufacturing tolerances are applicable to those values. As appreciated by those in the art, manufacturing tolerances may be determined to achieve a desired mean and standard deviation of manufactured components in relation to the ideal component profile.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

Embodiments have been described herein with reference to the accompanying drawings. However, some modifications to the described embodiments may be made without departing from the spirit and scope of the described embodiments, as described in the appended claims.

## Claims

1. An adaptor transfer case configured for use in a vehicle having a powertrain and a primary transfer case; said primary transfer case comprising: a primary input shaft configured to be driven by the powertrain; a first output shaft adapted to drive a first driveline; and a second output shaft adapted to drive a second driveline; wherein said adaptor transfer case comprises:
an input shaft configured to be driven by the powertrain; and
an output shaft configured for coupling to the primary input shaft of the primary transfer case,
wherein the input shaft is configured to be coupled to the powertrain at a first side of the adaptor transfer case, and the output shaft is configured to be coupled to the primary input shaft of the primary transfer case at the first side of the adaptor transfer case.

2. An adaptor transfer case according to claim 1, wherein the adaptor transfer case is configured for mounting at least partially within a spatial envelope immediately adjacent the primary transfer case.

3. An adaptor transfer case according to claim 2, wherein the spatial envelope is an original gearbox spatial envelope.

4. An adaptor transfer case according to any one of the preceding claims, comprising a gear assembly comprising three or more gears including a first gear and a second gear, wherein:
the input shaft includes the first gear; and
the output shaft includes the second gear.

5. An adaptor transfer case according to claim 4, wherein the gear assembly is configured so that the ratio of the first gear and second gear is within a range of from about 0.5:1 to about 5:1, such as from about 0.83:1 to about 2:1.

6. An adaptor transfer case according to claim 5, wherein the gear assembly is configured so that the ratio of the first gear and second gear is about 1:1.

7. An adaptor transfer case according to any one of claims 1 to 3, comprising a chain drive assembly comprising including a first sprocket and a second sprocket, wherein:
the input shaft includes the first sprocket; and
the output shaft includes the second sprocket.

8. An adaptor transfer case according to claim 7, wherein the chain drive assembly is configured so that the ratio of the first sprocket and second sprocket is within a range of from about 0.5:1 to about 5:1, such as from about 0.83: 1 to about 2:1.

9. An adaptor transfer case according to claim 7, wherein the chain drive assembly is configured so that the ratio of the first sprocket and second sprocket is about 1:1.

10. An adaptor transfer case according to any one of the preceding claims, further comprising an oil pump and a lubricant manifold, operatively connected to a housing of the adaptor transfer case and configured to provide lubrication to one or more components of the adaptor transfer case.

11. An adaptor transfer case according to claim 10, wherein the lubricant manifold is positioned at an upper portion of the housing, to permit lubricant to enter an upper region of the adaptor transfer case.

12. A method of converting or reconfiguring the powertrain of a vehicle using an adaptor transfer case according to any one of the preceding claims, the vehicle having a powertrain and a primary transfer case; said primary transfer case comprising: a primary input shaft configured to be driven by the powertrain; a first output shaft adapted to drive a first driveline; and a second output shaft adapted to drive a second driveline; said method comprising:
installing the adaptor transfer case, said installing comprising:
coupling the output shaft of the adaptor transfer case to the primary input shaft of the primary transfer case; and
coupling the input shaft of the adaptor transfer case to a gearbox of the powertrain.

13. A method according to claim 12 and comprising: removing a first gearbox from the vehicle before installing the adaptor transfer case; wherein the gearbox to which the input shaft of the adaptor transfer case is coupled is a second gearbox, different to the first gearbox.

14. A method according to claim 13, wherein the adaptor transfer case is installed at least partially within a spatial envelope previously occupied by the first gearbox

15. A method according to claim 13 or 14, wherein the second gearbox is an automatic transmission assembly.
